# EUROPÄISCHE PATENTSCHRIFT

(11) **EP 0 894 356 B1**
(45) Veröffentlichungstag und Bekanntmachung des Hinweises auf die Patenterteilung: **04.10.2001**
(21) Anmeldenummer: 97915343.4
(22) Anmeldetag: 12.03.1997
(51) Int. Cl.: H02H 7/085

(54) **VORRICHTUNG UND VERFAHREN ZUR ELEKTRONISCHEN ÜBERWACHUNG EINES IN EINEM FAHRZEUG ANGEORDNETEN VERSTELLANTRIEBS**
DEVICE AND PROCESS FOR ELECTRONIC MONITORING OF AN ADJUSTING DRIVE IN A VEHICLE
DISPOSITIF ET PROCEDE POUR LA SURVEILLANCE ELECTRONIQUE D'UN ENTRAINEMENT DE REGLAGE DANS UN VEHICULE

(30) Priorität: 17.04.1996 DE 19615123
(43) Veröffentlichungstag der Anmeldung: 03.02.1999
(73) Patentinhaber: ROBERT BOSCH GMBH, 70442 Stuttgart (DE)
(72) Erfinder: LAMM, Hubert, D-77876 Kappelrodeck (DE); HADERER, Günter, D-77815 Bühl (DE)
(86) Internationale Anmeldenummer: DE9700479
(87) Internationale Veröffentlichungsnummer: WO9739509

(56) Entgegenhaltungen:
- DE-C- 4 339 365
- GB-A- 2 198 860
- US-A- 4 736 144

## Beschreibung

### Stand der Technik

Die Erfindung geht aus von einer Vorrichtung und einem Verfahren zur elektronischen Überwachung eines in einem Fahrzeug angeordneten Verstellantriebs nach der Gattung der unabhängigen Ansprüche. Aus der DE-A 40 20 351 ist schon ein Verfahren zur elektronischen Überwachung und Steuerung des Öffnungs- und Schließvorgangs von elektrisch betriebenen Aggregaten bekannt, bei dem mittels eines zusätzlich zu installierenden Sensors Beschleunigungskräfte, insbesondere in vertikaler Ausrichtung, erfaßt werden.

Ferner ist in dem DE-Patent 34 13 380 eine Vorrichtung zum Öffnen und Schließen eines Verdecks eines Fahrzeugs beschrieben. Bei einer Fahrzeuggeschwindigkeit von > 3 km/h wird ein Sperrsignal erzeugt, das den Antrieb des Verdecks blockiert. Ein fahrzeuggeschwindigkeitsabhängiger Grenzwert für eine Schließkraftbegrenzung jedoch ist nicht bekannt.

### Vorteile der Erfindung

Die erfindungsgemäße Vorrichtung und das erfindungsgemäße Verfahren zur elektronischen Überwachung eines in einem Fahrzeug angeordneten Verstellantriebs hat den Vorteil, daß der Grenzwert einer Schließkraftbegrenzung über ein Tachosignal den geschwindigkeitsabhängigen Kraft- und Druckverhältnissen angepaßt wird. Damit kann einem Auslösen der Schließkraftbegrenzung aufgrund bei hohen Geschwindigkeiten auftretenden Kräften ohne eines Verklemmens entgegengewirkt werden, ohne daß auf eine Schließkraftüberwachung verzichtet werden müßte. Ein weiterer Vorteil besteht darin, nicht auf ein Signal eines zusätzlich zu installierenden Sensors zurückgreifen zu müssen.

Durch die jeweils in den abhängigen Ansprüchen aufgeführten Maßnahmen sind vorteilhafte Vereinfachungen möglich:

Besonders vorteilhaft durch einfache Realisierung ist die Berücksichtigung eines binären Zustands, ob das Fahrzeugs fährt oder steht.

Eine andere Ausgestaltung sieht ein quantisiertes Tachosignal vor, das eine detaillierte Information über den Bewegungszustand des Kraftfahrzeugs liefert.

Die Vorrichtung und das Verfahren zur elektronischen Überwachung eines in einem Fahrzeug angeordneten Verstellantriebs finden bevorzugte Verwendung bei Fensterhebern und verhindern Fehlauslösungen durch Rüttelbewegungen. Bei Schiebedächern wird durch die geschwindigkeitsabhängige Schließkraftbegrenzung den sich verändernden Druckverhältnissen im Hebebereich Rechnung getragen und somit ebenfalls das Fehlauslösungsrisiko reduziert.

Weitere vorteilhafte Ausgestaltungen ergeben sich aus der Beschreibung.

### Zeichnung

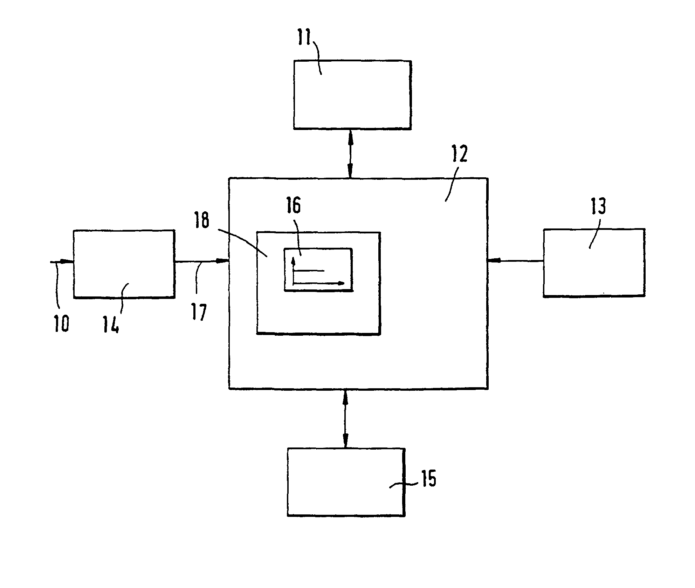

Ein Ausführungsbeispiel einer erfindungsgemäßen Vorrichtung ist in der Figur dargestellt.

### Beschreibung

Eine Steuerelektronik 12 beinhaltet eine Anordnung 18 zur Bereitstellung wenigstens eines Grenzwerts einer Schließkraftbegrenzung, die einen Grenzwert 16 der Schließkraftbegrenzung erzeugt. In die Steuerelektronik 12 fließen ein verarbeitetes Tachosignal 17, das von einer Fahrzeuggeschwindigkeitsverarbeitung 14 aus einem Tachosignal 10 gebildet wird, und Signale, die von einer externen Sensorik 13, einem Verstellantrieb 15 und Bedienelementen 11 erzeugt werden. Die Steuerelektronik 12 gibt Signale ab an die Bedienelemente 11 und den Verstellantrieb 15.

Die in der Figur gezeigte Anordnung arbeitet folgendermaßen:

Über die Bedienelemente 11 wird der Steuerelektronik 12 die gewünschte Betriebsart, wie zum Beispiel das Schließen eines Schiebedachs, mitgeteilt. Die Steuerelektronik überprüft, ob ein Kriterium für Einklemmen vorliegt, das heißt, ob der von der Anordnung 18 zur Bereitstellung wenigstens eines Grenzwerts 16 der Schließkraftbegrenzung ermittelte Grenzwert 16 den tatsächlichen Wert erreicht oder überschreitet. Hat die Steuerelektronik 12 den Verstellantrieb 15 als klemmend erkannt, so erfolgt ein Stoppen oder Reversieren des Verstellantriebs 15. Damit soll die Schädigung einer in den Schließbereich geratenen Person oder des Verstellantriebs 15 ausgeschlossen werden. Dabei können bestimmte Situationen zu Fehlauslösungen führen, wenn beispielsweise kurzzeitig große Kräfte auf den Verstellantrieb 15 wirken. Dies könnte der Fall sein bei hohen Geschwindigkeiten, wenn sich das Schiebedach in der Hebelage befindet, oder bei Rüttelbewegungen, die durch Bodenunebenheiten hervorgerufen werden.

Diese Fehlauslösungen werden durch die Berücksichtigung äußerer Einflüsse mittels verarbeiteten Tachosignals 17 bei der Ermittlung des Grenzwerts 16 reduziert.

Die Fahrzeuggeschwindigkeitsverarbeitung 14 benutzt das Tachosignal 10 als Eingangsgröße und gibt je nach Ausführung ein kontinuierliches, binäres oder quanitisiertes, verarbeitetes Tachosignal 17 ab. Das binäre, verarbeitete Tachosignal 17 ändert den logischen Zustand, wenn ein einstellbarer Schwellenwert überschritten ist. Für einen einfachen Schaltungsaufbau ist eine Unterscheidung zwischen dem Zustand, ob das Fahrzeug fährt oder steht, sinnvoll, um bei fahrendem Fahrzeug einen höheren Grenzwert 16 der Schließkraftbegrenzung vorzugeben als bei stehendem Fahrzeug, da in letzterem Fall geringere Kräfte auf den Verstellantrieb 15 wirken. Für eine genauere Bestimmung des Grenzwertes 16 der Schließkraftbegrenzung kann das Tachosignal 10 beliebig fein quantisiert und im genauesten Fall jeder Quantisierungsstufe ein Grenzwert 16 der Schließkraftbegrenzung zugeordnet werden. Dadurch wird eine exakte Angleichung des Grenzwertes 16 der Schließkraftbegrenzung erreicht, der an die geschwindigkeitsabhängigen Kraft- und Druckverhältnisse der vom Verstellantrieb 15 zu betätigenden Kraftfahrzeugkomponenten angepaßt ist. Die Anwendung der elektronischen Überwachung des Verstellantriebs 15 zum Öffnen und Schließen ist insbesondere für ein Schiebedach- und für ein Fensterhebersystem von Vorteil. Außerdem ist die vorliegende Erfindung geeignet für Verstellantriebe von Außenspiegeln und Antennen.

Das Tachosignal 10 steht heute bereits ohnehin zur Verfügung. Deshalb ist der Aufwand der zusätzlichen Berücksichtigung des Tachosignals 10 in der Steuerelektronik 15 gering.

## Patentansprüche

1. Vorrichtung zur elektronischen Überwachung eines in einem Fahrzeug angeordneten Verstellantriebs (15), mit einer Steuerelektronik (12), einem Vergleicher und einer Anordnung (18) zur Bereitstellung wenigstens eines Grenzwertes (16) einer Schließkraftbegrenzung, **dadurch gekennzeichnet, daß** eine Ermittlung der Fahrzeuggeschwindigkeit sowie eine Fahrzeuggeschwindigkeitsverarbeitung (14) vorgesehen sind, und **daß** ein verarbeitetes Tachosignal (17) der Anordnung (18) zum Korrigieren des Grenzwerts (16) zugeführt ist.

2. Vorrichtung nach Anspruch 1, **dadurch gekennzeichnet, daß** das verarbeitete Tachosignal (17) binär gemäß eines frei wählbaren Schwellenwerts erfaßt ist und **daß** das binär erfaßte, verarbeitete Tachosignal (17) der Anordnung (18) zum Korrigieren des Grenzwerts (16) zugeführt ist.

3. Vorrichtung nach Anspruch 1, **dadurch gekennzeichnet, daß** das verarbeitete Tachosignal (17) quantisiert gemäß frei wählbarer Quantisierungsstufen erfaßt ist und **daß** das quantisiert erfaßte, verarbeitete Tachosignal (17) der Anordnung (18) zum Korrigieren des Grenzwerts (16) zugeführt ist.

4. Vorrichtung nach einem der Ansprüche 1 bis 3, **gekennzeichnet durch** die Verwendung bei einem Kraftfahrzeug-Schiebedach.

5. Verfahren zur elektronischen Überwachung eines in einem Fahrzeug angeordneten Verstellantriebs (15), wobei eine Steuerelektronik (12), ein Vergleicher und eine Anordnung (18) zur Bereitstellung wenigstens eines Grenzwertes der Schließkraftbegrenzung vorgesehen sind, **dadurch gekennzeichnet, daß** eine Fahrzeuggeschwindigkeit ermittelt wird und ein von einer Fahrzeuggeschwindigkeitsverarbeitung erzeugtes, verarbeitetes Tachosignal (17) in der Anordnung (18) herangezogen wird zum Korrigieren des Grenzwerts (16).

6. Verfahren nach Anspruch 5, **dadurch gekennzeichnet, daß** das verarbeitete Tachosignal (17) binär gemäß eines frei wählbaren Schwellenwertes erfaßt wird und **daß** das binär erfaßte, verarbeitete Tachosignal (17) der Anordnung (18) zum Korrigieren des Grenzwerts (16) zugeführt wird.

7. Verfahren nach Anspruch 5, **dadurch gekennzeichnet, daß** das verarbeitete Tachosignal (17) quantisiert gemäß frei wählbarer Quantisierungsstufen erfaßt wird und **daß** das quantisiert erfaßte, verarbeitete Tachosignal (17) der Anordnung (18) zum Korrigieren des Grenzwerts (16) zugeführt wird.

8. Verfahren nach einem der Ansprüche 5 bis 7, **gekennzeichnet durch** die Verwendung bei einem Kraftfahrzeug-Schiebedach.

## Claims

1. Device for electronically monitoring an adjusting drive (15) arranged in a vehicle, having an electronic control system (12), a comparator and an arrangement (18) for providing at least one limiting value (16) of a closing force limiting system, **characterized in that** there is provision for the vehicle speed to be determined and the vehicle speed to be processed (14), and **in that** a processed speedometer signal (17) is fed to the arrangement (18) for correcting the limiting value (16).

2. Device according to Claim 1, **characterized in that** the processed speedometer signal (17) is acquired in binary form in accordance with a freely selectable threshold value, and **in that** the processed speedometer signal (17) which is acquired in binary form is fed to the arrangement (18) for correcting the limiting value (16).

3. Device according to Claim 1, **characterized in that** the processed speedometer signal (17) is acquired quantized in accordance with freely selectable quantization stages, and **in that** the processed speedometer signal (17) which is acquired in quantized form is fed to the arrangement (18) for correcting the limiting value (16).

4. Device according to one of Claims 1 to 3, **characterized by** the use in a motor vehicle sunroof.

5. Method for electronically monitoring an adjusting drive (15) arranged in a vehicle, an electronic control system (12), a comparator and an arrangement for providing at least one limiting value of the closing force limiting system being provided, **characterized in that** a vehicle speed is determined and a processed speedometer signal (17) which is generated by a vehicle speed processing system is used in the arrangement (18) to correct the limiting value (16).

6. Method according to Claim 5, **characterized in that** the processed speedometer signal (17) is acquired in binary form in accordance with a freely selectable threshold value, and **in that** the processed speedometer signal (17) which is acquired in binary form is fed to the arrangement (18) for correcting the limiting value (16).

7. Method according to Claim 5, **characterized in that** the processed speedometer signal (17) is acquired quantized in accordance with freely selectable quantization stages, and **in that** the processed speedometer signal (17) which is acquired in quantized form is fed to the arrangement (18) for correcting the limiting value (16).

8. Method according to one of Claims 5 to 7, **characterized by** the use in a motor vehicle sunroof.

## Revendications

1. Dispositif de surveillance électronique d'un actionneur (15) équipant un véhicule, comprenant une électronique de commande (12), un comparateur et un dispositif (18) fournissant au moins une valeur limite (16) pour limiter une force de fermeture,
**caractérisé par**
- une détermination de la vitesse du véhicule et un moyen de traitement de la vitesse du véhicule (14), et
- un signal tachymétrique (17), traité, est fourni au dispositif (18) pour corriger la valeur limite (16).

2. Dispositif selon la revendication 1,
**caractérisé en ce que**
- le signal tachymétrique (17) traité est saisi de manière binaire selon un seuil choisi librement, et
- le signal tachymétrique (17) traité, saisi de manière primaire, est fourni au dispositif (18) pour corriger la valeur limite (16).

3. Dispositif selon la revendication 1,
**caractérisé en ce que**
- le signal tachymétrique traité (17) est quantifié selon des niveaux de quantification choisis librement, et
- le signal tachymétrique (17), traité, saisi, quantifié, est fourni au dispositif (18) pour corriger la valeur limite (16).

4. Dispositif selon l'une quelconque des revendications 1 à 3,
**caractérisé par**
son application à un toit ouvrant de véhicule automobile.

5. Procédé de surveillance électronique d'un actionneur (15) équipant un véhicule, selon lequel
une électronique de commande (12), un comparateur et un dispositif (18) fournissant au moins une valeur limite de la force de fermeture sont prévus,
**caractérisé en ce qu'**
on détermine la vitesse du véhicule et on utilise un signal tachymétrique (17) traité, généré par le traitement de la vitesse du véhicule dans un dispositif (18) pour corriger la valeur limite (16).

6. Procédé selon la revendication 5,
**caractérisé en ce que**
le signal tachymétrique (17), traité, est saisi de manière binaire selon un seuil choisi librement, et le signal tachymétrique (17), traité, saisi de manière binaire, est fourni au dispositif (18) pour corriger la valeur limite (16).

7. Procédé selon la revendication 5,
**caractérisé en ce que**
le signal tachymétrique (17), traité, est quantifié selon des niveaux de quantification choisis librement, et le signal tachymétrique traité (17), saisi, quantifié, est fourni au dispositif (18) pour corriger la valeur limite (16).

8. Procédé selon l'une quelconque des revendications 5 à 7,
**caractérisé par**
son application à un toit ouvrant de véhicule automobile.
